# EUROPÄISCHE PATENTANMELDUNG

(11) **EP 4 123 219 A1**
(43) Veröffentlichungstag der Anmeldung: **25.01.2023**
(21) Anmeldenummer: 22195165.0
(22) Anmeldetag: 06.10.2020
(51) Int. Cl.: F21V 3/02, F21V 5/00, F21V 7/00, F21V 17/00, F21V 3/06, F21V 31/00, F21Y 103/10, F21Y 105/10, F21Y 115/10, B29D 11/00

(54) **POSITIONIERUNG EINES SILIKONLINSENKÖRPERS AN EINER LED**

(30) Priorität: 07.10.2019 DE 102019126892
(62) Teilanmeldung aus: 20200321.6
(71) Anmelder: Siteco GmbH, 83301 Traunreut (DE)
(72) Erfinder: Eichele, Timo, 83362 Surberg (DE); Kudlek, Michael, 83349 Palling (DE)
(74) Vertreter: Schmidt, Steffen

(57) **Zusammenfassung**

Die Erfindung betrifft eine Beleuchtungseinrichtung, umfassend eine lichttechnische Abdeckung (4) und wenigstens ein Leuchtmittel in Form einer LED (1), wobei die LED (1) auf einer Platine (2) angeordnet und elektrisch kontaktiert ist, sowie ein Linsenkörper (3) aus Silikon, der an einer zur LED (1) weisenden Oberfläche der Abdeckung (4) angebracht ist, insbesondere dort aufgedruckt ist, und gegenüber der LED (1) so positioniert ist, dass Licht der LED (1) in den Linsenkörper (3) eintritt, wobei zur Positionierung des Linsenkörpers (3) gegenüber der LED (1) ein mechanischer Kontakt zwischen dem Linsenkörper (3) und der LED (1) und/oder der Platine (2) gebildet ist.

## Beschreibung

Die vorliegende Erfindung betrifft Beleuchtungseinrichtungen, insbesondere Innen- oder Außenleuchten oder LED-Module, welche in solchen Leuchten verwendet werden, wobei die Beleuchtungseinrichtung wenigstens eine LED als Leuchtmittel aufweist sowie eine lichttechnische Abdeckung, welche gegenüberliegend der LED angeordnet ist.

Auf dem technischen Gebiet der Beleuchtungseinrichtungen mit LEDs hat sich durchgesetzt, den LEDs (worunter hier jede Form von Halbleiterlichtquellen einschließlich organischer Halbleiterlichtquellen verstanden wird) eine Linse zuzuordnen, um die Lichtverteilung der LED für die gewünschte Anwendung der Beleuchtungseinrichtung einzustellen. Üblicherweise werden solche Linsen kostengünstig aus Kunststoff, insbesondere PC oder PMMA, erzeugt und mit Hilfe von Schrauben oder Rastverbindungen an oder über der LED positioniert.

Aus der Veröffentlichung WO 2012/031703 A1 ist eine Lösung bekannt, bei welcher LED-Module direkt mit Silikon umspritzt werden, um die LEDs gegenüber der aus Silikon gebildeten Optik richtig zu positionieren. Diese Lösung hat jedoch den Nachteil, dass durch das Umspritzen mit Silikon die LEDs auch beschädigt werden können. Generell ist jedoch Silikon gegenüber anderen Kunststoffmaterialein zu bevorzugen, weil Silikon als Linsenmaterial im Vergleich zu anderen Kunststoffen wie PC oder PMMA weniger Alterungserscheinungen, z.B. Verspröden oder Farbveränderungen, aufweist.

Aufgabe der vorliegenden Erfindung ist es daher, eine Beleuchtungseinrichtung bereitzustellen, bei der es möglich ist, eine Optik für LEDs präzise zu den LEDs zu positionieren, ohne die LEDs oder angrenzende elektronische Bauteile zu beschädigen.

Gelöst wird die Aufgabe durch eine Beleuchtungseinrichtung nach Anspruch 1.

Eine Besonderheit der erfindungsgemäßen Beleuchtungseinrichtung umfasst einen Linsenkörper aus Silikon, welcher auf einer der LED gegenüberliegenden Oberfläche eine Abdeckung angebracht ist und zur richtigen Positionierung gegenüber der LED mit der LED oder der Platine, auf welcher die LED positioniert ist, einen mechanischen Kontakt eingeht. Möglich ist das erst durch die Verwendung von Silikon als Linsenkörper, weil Silikon weich genug ist, so das auch bei thermischen Verspannungen zwischen der Platine der LED und der Abdeckung keine Bruchgefahr gegeben ist. Ferner ist von Vorteil, dass der Linsenkörper nicht an der LED selber angebracht ist, weil dadurch ggf. Beschädigungen beim Aufbringen des Silikonkörpers an der LED vermieden werden können. Der Linsenkörper aus Silikon ist an der Abdeckung fest angebracht, vorzugsweise im 3D-Druckverfahren darauf aufgedruckt, und wird erst beim Positionieren der Abdeckung in der Beleuchtungseinrichtung auf die eine oder mehrere LEDs gedrückt, so dass ein mechanischer Kontakt zwischen dem Linsenkörper und der LED oder der LED-Platine gebildet wird, so dass der Linsenkörper präzise gegenüber der LED ausgerichtet ist, obwohl er mechanisch nur mit der Abdeckung fest verbunden ist. Da Silikon weich ist, kann der Linsenkörper auch ohne Bildung von Luftblasen auf die Lichtaustrittsfläche der LED gedrückt werden, so dass eine durchgehende optische Verbindung zwischen der LED und dem Linsenkörper hergestellt wird.

Gemäß einer bevorzugten Ausführungsform definieren der Linsenkörper und die LED eine Kontaktfläche zueinander. In dieser Ausführungsform berührt der Linsenkörper direkt die LED, so dass die Positionierung des Linsenkörpers gegenüber der LED auch bei mechanischen Erschütterungen in jedem Fall erhalten bleibt.

Gemäß einer bevorzugten Ausführungsform weist der Linsenkörper seitlich der Kontaktfläche wenigstens eine Anlaufschräge auf, welche eingerichtet ist, so dass beim Aneinanderfügen des Linsenkörpers und der LED die LED zur Kontaktfläche geführt wird. Durch die Anlaufschräge wird beim Positionieren der Abdeckung in dem Leuchtengehäuse der Linsenkörper von selbst in die richtige Position gegenüber der LED geschoben.

Gemäß einer bevorzugten Ausführungsform ist der Linsenkörper aus wenigstens zwei verschiedenen Silikonmaterialien gebildet, die sich in ihrer Härte unterscheiden, und der Linsenkörper weist in dem Bereich der Kontaktfläche das weichere der beiden Silikonmaterialien auf. Durch das weichere der beiden Silikonmaterialien wird die LED gegenüber mechanischen Einwirkungen geschützt.

Gemäß einer bevorzugten Ausführungsform ist die Kontaktfläche seitens der LED durch eine Lichtaustrittsfläche der LED gebildet. Durch die Kontaktfläche an der Lichtaustrittsfläche der LED kann das Licht der LED direkt in den Linsenkörper eintreten, ohne vorher durch einen Luftspalt hindurchgeführt werden zu müssen. Dies hat den Vorteil, dass etwaige Verluste durch Reflektion an Grenzflächen vermieden werden können. Ferner ist diese Ausführungsform in Verbindung mit einem weichen Silikonmaterial von Vorteil, weil sich beim Aneinanderfügen der Bauteile auch keine Luftblasen zwischen der LED und dem Linsenkörper ausbilden können, welche unkontrollierte Lichtreflektion oder Lichtbrechung hervorrufen.

Gemäß einer bevorzugten Ausführungsform greift ein Abschnitt des Linsenkörpers mit einem Vorsprung in eine Öffnung der Platine ein. In dieser Ausführungsform steht der Linsenkörper nicht direkt im Kontakt mit der LED sondern mit der Platine. Da die LED jedoch fest mit der Platine verbunden ist, ist dadurch auch eine präzise Ausrichtung des Linsenkörpers gegenüber der LED möglich. Diese Ausführungsform ist insbesondere bevorzugt, wenn ein Luftspalt zwischen der Lichtaustrittsfläche der LED und der Lichteintrittsfläche des Linsenkörpers gewünscht ist, um durch Brechung an der Lichteintrittsfläche des Linsenkörpers eine weitere Lichtlenkung zu ermöglichen.

Gemäß einer bevorzugten Ausführungsform ist das Positionierungsloch ein Durchgangsloch und der Vorsprung am Abschnitt des Linsenkörpers greift durch das Durchgangsloch hindurch in Richtung zu einem Gehäuseabschnitt der Beleuchtungseinrichtung und wirkt formschlüssig mit dem Gehäuseabschnitt zusammen. Z.B. kann ein Vorsprung des Linsenkörpers an einem Fixierungsstift des Gehäusebodens eingreifen. In dieser Ausführungsform positioniert der Vorsprung des Linsenkörpers nicht nur den Linsenkörper gegenüber der LED sondern außerdem den Linsenkörper gegenüber dem Gehäuseabschnitt. Dadurch lässt sich in einem Produktionsschritt das Gehäuse, die LED-Platine und der Linsenkörper mit der Abdeckung gegeneinander positionieren.

Gemäß einer bevorzugten Ausführungsform drückt der Linsenkörper direkt oder indirekt die Platine auf einen Gehäuseabschnitt der Beleuchtungseinrichtung. In dieser Ausführungsform sind keine weiteren Befestigungsmittel zum Anbringen der Platine in der Beleuchtungseinrichtung notwendig. Ferner ist durch das Andrücken der Platine auf den Gehäuseabschnitt auch ein guter thermischer Kontakt zu realisieren, so dass der Gehäuseabschnitt auch als Kühlkörper für die Platine bzw. die darauf angeordneten LEDs dienen kann.

Gemäß einer bevorzugten Ausführungsform weist die lichttechnische Abdeckung eine Dichtung, vorzugsweise eine umlaufende Dichtung auf und die Dichtung dichtet die Abdeckung gegenüber einem Gehäuseabschnitt der Beleuchtungseinrichtung ab. Die Dichtung lässt sich beispielsweise ebenso wie die Linsenkörper direkt aus Silikon auf die Abdeckung aufdrucken.

Gemäß einer bevorzugten Ausführungsform wird die Abdeckung mittels der Dichtung reibschlüssig in dem Gehäuseabschnitt gehalten wird. Bei dieser Ausführungsform entfällt die Notwendigkeit separater Befestigungsmittel, um die Abdeckung in dem Gehäuse an der Beleuchtungseinrichtung zu montieren.

Weitere Merkmale und Vorteile der vorliegenden Erfindung werden aus der nachfolgenden Beschreibung bevorzugter Ausführungsformen, die in Verbindung mit den Figuren gegeben werden, deutlich. In den Figuren ist folgendes dargestellt:
Figur 1 zeigt einen Querschnitt durch eine Beleuchtungseinrichtung gemäß einer ersten Ausführungsform.
Figur 2 zeigt einen Querschnitt durch einen Teil einer Beleuchtungseinrichtung gemäß einer weiteren Ausführungsform.
Figuren 3 und 4 zeigen einen Querschnitt durch eine Beleuchtungseinrichtung gemäß einer weiteren Ausführungsform in unterschiedlichen Stadien des Zusammenbaus.
Figur 5 zeigt einen Querschnitt durch eine Beleuchtungseinrichtung gemäß einer weiteren Ausführungsform.
Figuren 6 bis 8 zeigen einen Querschnitt durch eine Beleuchtungseinrichtung gemäß einer weiteren Ausführungsform in verschiedenen Stadien des Zusammenbaus.
Figur 9 zeigt einen Ausschnitt eines Querschnitts durch eine Beleuchtungseinrichtung gemäß einer weiteren Ausführungsform.

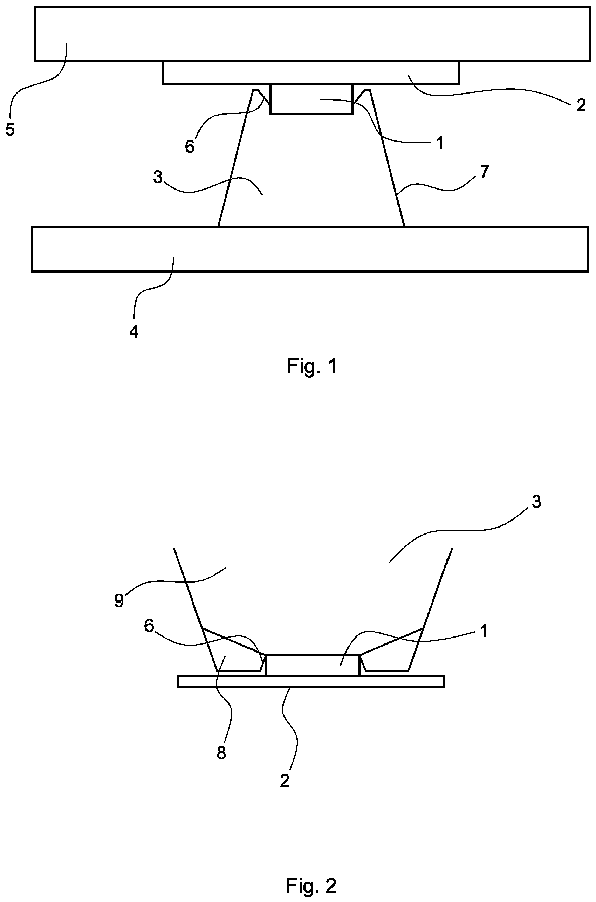

Bezugnehmend auf die Figur 1 wird eine erste Ausführungsform einer Beleuchtungseinrichtung gemäß der Erfindung erläutert. Figur 1 zeigt die Beleuchtungseinrichtung im Querschnitt im Bereich durch eine LED 1. Es ist dabei zu verstehen, dass die Leuchte mehrere LEDs 1 aufweisen kann und Figur 1 nur einen dieser Bereiche beispielhaft darstellt. Die LED 1 ist auf einer Platine 2, auch als PCB bezeichnet, befestigt und darauf elektrisch kontaktiert. Die Platine 2 ist auf einem Gehäuseabschnitt 5 der Beleuchtungseinrichtung befestigt. Gegenüberliegend der LED 1 ist eine lichttechnische Abdeckung 4 vorgesehen, welche die LED schützt. Die Abdeckung 4 ist transparent oder wenigstens teilweise transparent ausgeführt, z.B. aus einem transparenten Kunststoff oder aus Glas. Der gesamte Bereich zwischen der Abdeckung 4 und der LED 1 ist durch einen Linsenkörper 3 aus Silikon gebildet. Der Linsenkörper 3 ist fest mit der Abdeckung 4 verbunden. Er kann insbesondere durch einen 3D-Druckverfahren auf die Oberfläche der Abdeckung 4 aufgedruckt werden, noch bevor die Abdeckung 4 an der Beleuchtungseinrichtung befestigt wird. Der Linsenkörper 3 weist Seitenflächen 7 auf, welche gegenüber der LED 1 so positioniert sind, dass Lichtstrahlung der LED 1 an den Seitenwänden 7 totalreflektiert wird, bevor es in die Abdeckung 4 eintritt. Dazu ist es jedoch erforderlich, dass der Linsenkörper 3 präzise gegenüber der LED 1 ausgerichtet ist. Erfindungsgemäß wird dazu ein mechanischer Kontakt zwischen dem Linsenkörper 3 und der LED 1 hergestellt. Der Linsenkörper 3 weist in der dargestellten Ausführungsform auf der zur LED 1 weisenden Seite eine Kontaktfläche auf, mit welcher der Linsenkörper 3 die LED 1 direkt berührt. Dabei ist von Vorteil, dass das Material des Linsenkörpers 3 verhältnismäßig weich ist, weil dadurch etwaige mechanische Spannungen, die z.B. durch unterschiedliche thermische Ausdehnung des PCB 2 gegenüber der Abdeckung 4 ausgeglichen werden können. Ferner hat das weiche Silikonmaterial auch den Vorteil, dass zwischen der LED 1 und dem Linsenkörper 3 keine Lufteinschlüsse beim Zusammenfügen der Komponenten entstehen. Um den Linsenkörper 3 präzise gegenüber der LED 1 beim Zusammenfügen der Bauteile ausrichten zu können, weist der Linsenkörper 3 ferner Anlaufschrägen 6 auf, die so angeordnet sind, dass beim Aneinanderfügen der Bauteile der Linsenkörper 3 von selbst richtig gegenüber der LED 1 ausgerichtet wird, d.h. in der dargestellten Ausführungsform, dass die LED 1 genau mittig am Linsenkörper 3 anliegt. Dadurch sind auch die Seitenwände 7 präzise gegenüber der LED 1 ausgerichtet, so dass die gewünschte Lichtlenkung in dem Linsenkörper 3 erfolgen kann.

Figur 2 zeigt eine Variante der Ausführungsform nach Figur 1. In diese Ausführungsform ist der Linsenkörper 3 aus zwei unterschiedlichen Silikonmaterialien gebildet, einem weicherem Material 8 und einem härteren Material 9. Diese Materialien können einfach im 3D-Druckverfahren hergestellt werden. Das weichere Linsenmaterial 8 ist im Bereich des Linsenkörpers 3 angeordnet, welcher in Kontakt mit der LED 1 ist. Dadurch wird die LED 1 geschützt, während das härtere Linsenmaterial 9 formstabil bleibt, so dass die gewünschte Lichtlenkung erzielt werden kann.

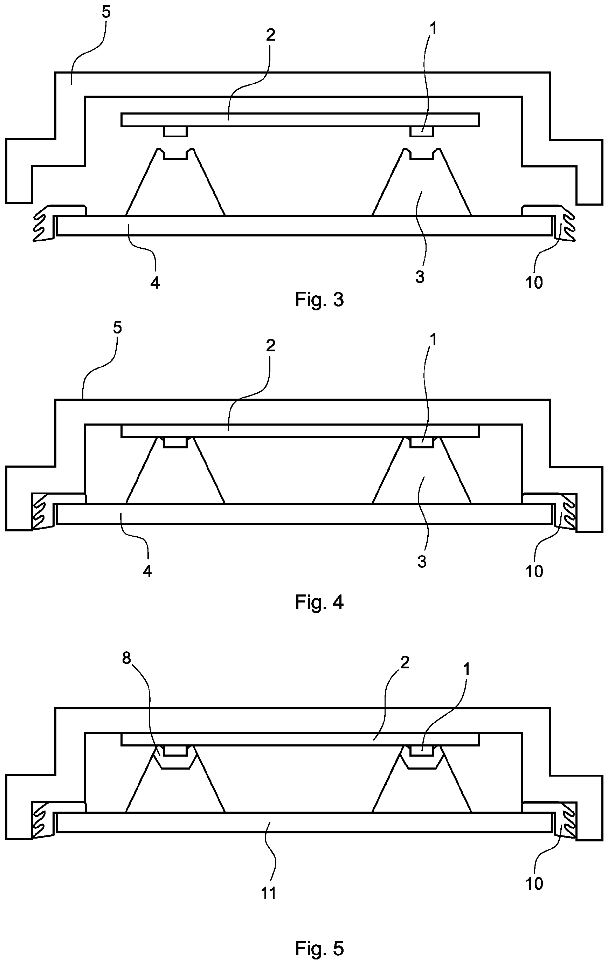

Die Figuren 3 und 4 zeigen den Zusammenbau einer Beleuchtungseinrichtung in einer Ausführungsform ähnlich zu denen in Figur 1 und 2 dargestellten Ausführungsformen. Die Beleuchtungseinrichtung weist ein Gehäuse 5 auf, in welchem die Abdeckung 4 positioniert wird. Die Abdeckung 4 ist mit einem umlaufenden Dichtring 10 versehen, welcher mehrere Rippen aufweist, um reibschlüssig in dem Gehäuse 5 montiert werden zu können. Wie in Figur 3 dargestellt, sind die Linsenkörper 3 bereits mit der Abdeckung 4 fest verbunden, bevor die Vorrichtung zusammengebaut wird. Aufgrund der Formgebung des Linsenkörpers 3 im Bereich der LED 1 werden die Komponenten präzise zueinander ausgerichtet, wenn die Linsenkörper 3 auf die LEDs 1 geschoben werden. Ferner ist bei dieser Ausführungsform vorgesehen, dass die Platine 2 der LEDs 1 alleine durch die Anpresskraft der Linsenkörper 3 auf die LEDs 1 an dem Gehäuse 5 gehalten wird. Dies ist ohne weiteres möglich, weil das Linsenmaterial 3 elastisch genug ist, um einen flexiblen Anpressdruck auf die LEDs 1 bzw. die Platine 2 aufzubringen, so dass die Platine 2 in dem Gehäuse 5 gehalten wird. Ferner ist von Vorteil, dass ständig ein Anpressdruck auf die Platine 2 in Richtung zum Gehäuseboden gerichtet ist, so dass die Platine 2 in thermischen Kontakt mit dem Gehäuseboden steht. Dadurch kann ein guter Wärmeaustausch zwischen LEDs 1, der Platine 2 und dem Gehäuse 5 stattfinden, so dass das Gehäuse 5 als Kühlkörper für die LEDs 1 dienen kann.

Figur 5 zeigt eine Variante der Ausführungsform nach Figuren 3 und 4. In dieser Ausführungsform weist die lichttechnische Abdeckung 4 selbst Abschnitte auf, die in Form eines Linsenkörpers ähnlich wie die Linsenkörper 3 wirken. Insbesondere weist die Abdeckung 4 Seitenflächen auf, an denen auch Totalreflektion des Lichts der LEDs stattfinden kann. Zwischen der lichttechnischen Abdeckung 4 und den LEDs 1 ist ein weiches Silikonmaterial 8 vorgesehen, welches einerseits als Linsenkörper 3 wirkt und andererseits als Druckmaterial zwischen der Abdeckung 4 und der LED 1 wirkt.

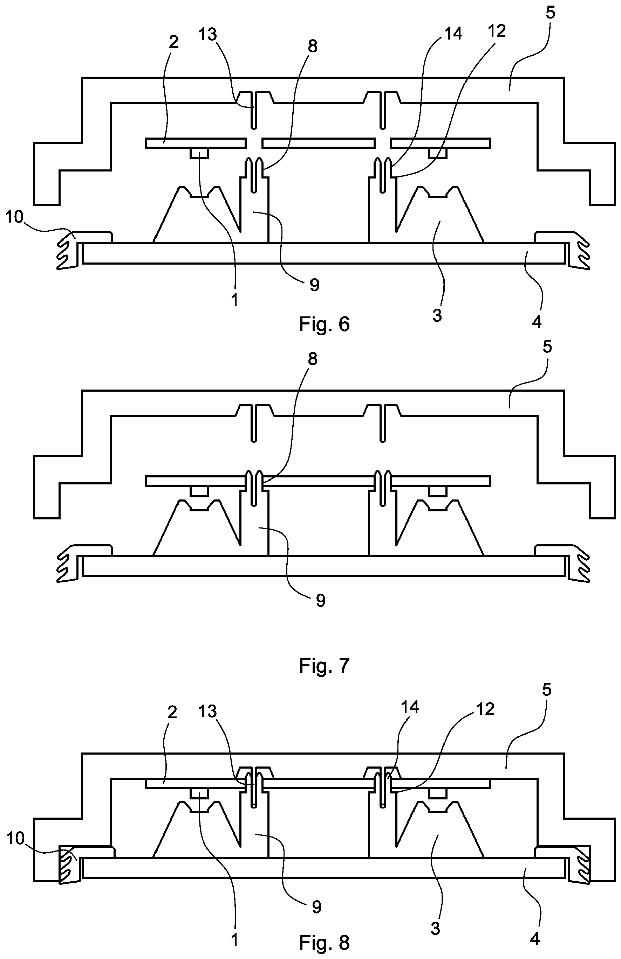

Die Figuren 6 bis 8 zeigen eine weitere Ausführungsform, bei welcher nicht die LEDs 1 in direktem Kontakt mit dem Linsenkörper 3 stehen, sondern zwischen der LED 1 und dem Linsenkörper 3 ein Luftspalt gebildet ist. In dieser Ausführungsform weist der Linsenkörper 3 jedoch einen Abschnitt 12 auf, der seitlich aus dem Material 9 des Linsenkörpers 3 gebildet ist und mit diesem direkt verbunden ist. Der Abschnitt 12 weist auf einer zur Platine 2 weisenden Seite Vorsprünge 14 auf, die aus einem weicheren Silikonmaterial 8 gebildet sind. Beim Zusammenbau werden die Vorsprünge 14 durch Öffnungen der Platine 2 geführt (siehe Figur 7) und weiter auf Fixierungsstifte 13 am Boden des Gehäuses 5 aufgesteckt (siehe Figur 8). Durch den Formschluss zwischen den Vorsprüngen und den Durchgangsöffnungen der Platine 2 werden die Linsenkörper 3 gegenüber den LEDs 1 präzise ausgerichtet. Ferner wird durch den Formschluss der Vorsprünge 14 mit den Fixierungsstiften 13 sowohl die Platine 2 als auch die Abdeckung 4 in dem Gehäuse 5 der Beleuchtungseinrichtung ausgerichtet. Auch in dieser Ausführungsform ist keine weitere Verbindung zwischen der Platine 2 und dem Gehäuse 5 notwendig. Alleine aufgrund des Reibschlusses zwischen Lamellen einer Dichtung 10 an der Abdeckung 4 und des Reibschlusses zwischen den Vorsprüngen 14 und den Fixierungsstiften 13 kann die Abdeckung 4 mit den Linsenkörpern 3 und die Platine 2 mit den LEDs 1 in dem Gehäuse 5 der Beleuchtungseinrichtung gehalten werden.

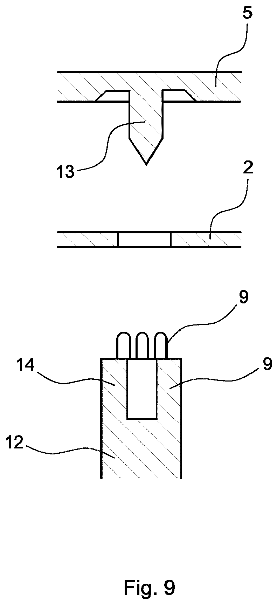

Die Figur 9 zeigt eine Variante der Ausführungsform gemäß den Figuren 6 bis 8. In dieser Ausführungsform sind mehrere Pins am Abschnitt 12 des Linsenkörpers 3 vorgesehen. Die Pins sind aus dem gleichen härteren Silikonmaterial 9 gebildet wie die übrigen Abschnitte des Linsenkörpers 3. Durch die einzelnen Pins kann sich der Abschnitt 12 des Linsenkörpers besser an die Platine 2 und den Fixierungsstift 13 des Gehäuses 5 festklemmen. Es ist dabei zu verstehen, dass die Pins des Abschnitts 12 des Linsenkörpers im gleichen 3D-Druckverfahren hergestellt werden können, wie die übrigen Bereiche des Linsenkörpers 3.

Weitere Varianten der verschiedenen Ausführungsformen der Erfindung, welche durch die beigefügten Ansprüche definiert ist, sind möglich. Insbesondere kann die Form der Linsenkörper 3 unterschiedlich ausgeführt sein. In den dargestellten Ausführungsformen weist der Linsenkörper 3 gegenüber der LED 1 immer einen Rücksprung auf, wobei Seitenflächen 7 als Abschnitte zur Totalreflexion dienen. Es können jedoch auch Linsenkörper vorgesehen sein, die eine sphärische Oberfläche aufweisen. Diese kann in Kontakt mit der LED oder in Kontakt mit der Platine der LED entstehen. Ferner kann auch die Abdeckung 4 unterschiedliche Formen annehmen. Die Abdeckung 4 kann nicht nur durch eine ebene Platte gebildet sein, wie in den Figuren 1 bis 4 und 6 bis 8 dargestellt. Sie kann selbst eine Freiformlinse bilden mit verschiedenen Abschnitten, die zur Lichtlenkung dienen. Dabei können ebenfalls Abschnitte vorgesehen sein, an denen Licht totalreflektiert wird. Es können jedoch auch sphärische Abschnitte gebildet sein, die zur Lichtbündelung oder zur Lichtaufweitung dienen. Jedoch ist auch an diesen Ausführungsformen immer ein Abschnitt eines Linsenkörpers aus Silikon zwischen der Abdeckung und der LED oder zwischen der Abdeckung und einem an der LED angrenzenden Abschnitt der Platine 2 vorgesehen.

### BEZUGSZEICHENLISTE

- 1: LED
- 2: Platine
- 3: Linsenkörper
- 4: Abdeckung
- 5: Gehäuseabschnitt
- 6: Anlaufschräge
- 7: Grenzfläche des Linsenkörpers zur Totalreflektion
- 8: weicheres Silikonmaterial
- 9: härteres Silikonmaterial
- 10: Dichtung
- 12: Abschnitt des Linsenkörpers
- 13: Fixierungsstift
- 14: Vorsprung

## Patentansprüche

1. Beleuchtungseinrichtung, umfassend:
eine lichttechnische Abdeckung (4) und wenigstens ein Leuchtmittel in Form einer LED (1), wobei die LED (1) auf einer Platine (2) angeordnet und elektrisch kontaktiert ist, sowie
ein Linsenkörper (3) aus Silikon, der an einer zur LED (1) weisenden Oberfläche der Abdeckung (4) angebracht ist, insbesondere dort aufgedruckt ist, und gegenüber der LED (1) so positioniert ist, dass Licht der LED (1) in den Linsenkörper (3) eintritt,
wobei zur Positionierung des Linsenkörpers (3) gegenüber der LED (1) ein mechanischer Kontakt zwischen dem Linsenkörper (3) und der LED (1) und/oder der Platine (2) gebildet ist,
wobei der Linsenkörper (3) aus wenigstens zwei verschiedenen Silikonmaterialien (8, 9) gebildet ist, die sich in ihrer Härte unterscheiden, und der Linsenkörper (3) in dem Bereich der Kontaktfläche das weichere (8) der beiden Silikonmaterialien aufweist.

2. Beleuchtungseinrichtung nach Anspruch 1, wobei der Linsenkörper (3) und die LED (1) eine Kontaktfläche zueinander definieren.

3. Beleuchtungseinrichtung nach Anspruch 2, wobei der Linsenkörper (3) seitlich der Kontaktfläche wenigstens eine Anlaufschräge (6) aufweist, welche eingerichtet ist, so dass beim Aneinanderfügen des Linsenkörpers (3) und der LED (1) die LED zur Kontaktfläche geführt wird.

4. Beleuchtungseinrichtung nach einem der Ansprüche 2 bis 3, wobei die Kontaktfläche seitens der LED (1) durch eine Lichtaustrittsfläche der LED (1) gebildet ist.

5. Beleuchtungseinrichtung nach einem der vorhergehenden Ansprüche, wobei ein Abschnitt des Linsenkörpers (3) mit einem Vorsprung (14) in eine Öffnung der Platine (2) eingreift.

6. Beleuchtungseinrichtung nach Anspruch 5, wobei die Öffnung ein Durchgangsloch ist und der Vorsprung (14) am Abschnitt des Linsenkörpers durch das Durchgangsloch hindurch in Richtung zu einem Gehäuseabschnitt (5) der Beleuchtungseinrichtung hindurchgreift und formschlüssig mit dem Gehäuseabschnitt (5) zusammenwirkt.

7. Beleuchtungseinrichtung nach Anspruch 6, wobei der Gehäuseabschnitt einen Fixierungsstift (13) umfasst, welcher in einen Vorsprung (14) des Linsenkörpers (3) eingreift.

8. Beleuchtungseinrichtung nach einem der vorhergehenden Ansprüche, wobei der Linsenkörper direkt oder indirekt die Platine (2) auf einen Gehäuseabschnitt (5) der Beleuchtungseinrichtung drückt.

9. Beleuchtungseinrichtung nach einem der vorhergehenden Ansprüche, wobei die lichttechnische Abdeckung (4) eine Dichtung (10), vorzugsweise eine umlaufende Dichtung (10) aufweist und die Dichtung (10) die Abdeckung gegenüber einem Gehäuseabschnitt (5) der Beleuchtungseinrichtung abdichtet.

10. Beleuchtungseinrichtung nach Anspruch 9, wobei die Abdeckung (4) mittels der Dichtung (10) reibschlüssig in dem Gehäuseabschnitt (5) gehalten wird.
